# EUROPÄISCHE PATENTANMELDUNG

(11) **EP 4 166 481 A1**
(43) Veröffentlichungstag der Anmeldung: **19.04.2023**
(21) Anmeldenummer: 22200588.6
(22) Anmeldetag: 10.10.2022
(51) Int. Cl.: B65G 15/60, B65G 39/16

(54) **UMLENKELEMENT**

(30) Priorität: 15.10.2021 DE 102021126860
(71) Anmelder: WIPOTEC GmbH, 67657 Kaiserslautern (DE)
(72) Erfinder: Blauth, Thorsten, 67734 Katzweiler (DE)
(74) Vertreter: Mischung, Ralf

(57) **Zusammenfassung**

Modulare Umlenkeinheit, umfassend ein in einer Querrichtung verlaufendes Tragteil, wenigstens eine entlang des Tragteils positionierte Modulstütze und wenigstens zwei Rollenmodule, deren Rollenachsen von der wenigstens einen Modulstütze aufgenommen und getragen werden, wobei die Umlenkeinheit als Ganzes modular austauschbar ist.

## Beschreibung

Die vorliegende Erfindung betrifft eine modulare Umlenkeinheit nach dem Oberbegriff des Anspruchs 1. Eine solche Umlenkeinheit wird eingesetzt in Transportvorrichtungen, die einen Bandkörper mit einem als Endlosband ausgebildeten Transportband aufweisen, um darauf aufliegende Produkte mithilfe des angetriebenen Bands zu transportieren. Am vorderen und/oder hinteren Ende des Bandkörpers wird das Transportband mithilfe der Umlenkeinheit umgelenkt. Dazu umfasst die Umlenkeinheit wenigstens eine Rolle, um die das Transportband herumgeführt wird.

An die Rolle des Transportbands werden unterschiedliche Anforderungen gestellt. Breite Transportbänder, die hohe Lasten transportieren und/oder stark vorgespannt werden müssen, benötigen Umlenkrollen mit größerem Durchmesser, um über die gesamte Breite des Transportbands eine ausreichende Biegefestigkeit aufzuweisen. Durchmesser von beispielsweise 60mm oder 80mm sind hier bekannt. Ein größerer Rollendurchmesser führt jedoch zu einem größeren Übergabespalt zwischen der Transportvorrichtung und einer in Förderrichtung daran angrenzenden, ebenfalls als Transportband ausgeführten Zuführ- oder Abführeinrichtung. Kleinere Produkte könnten daher bei der Übergabe an einen Bandkörper mit großem Rollendurchmesser in den Übergabespalt hineinfallen oder deren kontrollierte Übergabe zumindest gefährden.

Ein Anstoßen oder Herumschleudern der am Übergabespalt übergebenen Produkte ist insbesondere dann sehr störend, wenn der Bandkörper eine Vorlast für eine Waage bildet und ein auf dem Bandkörper aufliegendes bzw. mittels des Förderbandes darüber hinwegtransportiertes Produkt gewogen werden soll. Bei einem zu großen Übergabespalt kann das an den Bandkörper übergebene Produkt eine plötzliche schlagartige Beaufschlagung der Waage verursachen und den erforderlichen Einschwingprozess für ein genaues Messergebnis nachteilhaft verlängern oder das Einschwingen in der zur Verfügung stehenden Messzeit gänzlich verhindern. Letzteres ist daher insbesondere kritisch bei der dynamischen Wägung mit schnell fördernden Transportbändern, und speziell dann, wenn die zu wiegenden Produkte ein hohes Gewicht aufweisen und eine Dimension (Länge, Breite, Durchmesser) aufweisen, welche groß im Bezug zur Länge des Transportbandes ist, weil dadurch die Messzeit der Waage entsprechend kurz bzw. zu kurz ist.

Aufgabe der Erfindung war es daher, eine Umlenkeinheit zur Überwindung der vorgenannten Nachteile anzubieten, die darüber hinaus leicht austauschbar sein soll. Wünschenswert ist darüber hinaus eine Flexibilität in Förderbreite, so dass eine in verschiedenen Bandbreiten leicht herstellbare Umlenkeinheit geschaffen werden kann, welche auch geeignet sein soll, um im Feldeinsatz befindliche herkömmliche Umlenkeinheiten mit großem Rollendurchmesser einfach zu ersetzen (umzurüsten).

Die Aufgabe wird gelöst durch eine Umlenkeinheit nach Anspruch 1. Weitere vorteilhafte Ausführungsformen ergeben sich aus den Unteransprüchen.

Die Erfindung geht von der Erkenntnis aus, eine auch für höhere Lasten stabile Rolle mit dennoch kleinem Rollendurchmesser realisieren zu können durch Anordnung mehrerer kürzerer Rollenmodule nebeneinander, die gemeinsam eine Rollengruppe ausbilden, um welche das Transportband herumgeführt wird. Solche kürzeren Rollenmodule haben eine höhere Biegesteifigkeit als eine einzelne über die gesamte Transportbreite geführte durchgehende Rolle desselben Durchmessers. Zugleich sind die einzelnen Rollenmodule oder die von den Rollenmodulen gemeinsam gebildete Rollengruppe erfindungsgemäß leicht austauschbar, indem jedes Rollenmodul mithilfe von Modulstützen an einem über die ganze Förderbreite geführten Tragteil lösbar befestigbar ist. Das Tragteil mit den daran angeordneten Rollenmodulen bildet die erfindungsgemäße Umlenkeinheit. Diese lässt sich mit wenigen Handgriffen an einem in Förderrichtung gesehen vorderen und/oder hinteren Ende eines Bandkörpers anordnen bzw. austauschen, beispielsweise auch im Feld bei bestehenden Transportvorrichtungen. Durch die Nachrüstung kann eine bestehende Transportvorrichtung mit relativ geringen Kosten aufgewertet werden. Eine Neujustage des Übergabespalts ist nicht erforderlich, wodurch Stillstandzeiten reduziert werden.

Die erfindungsgemäße modulare Umlenkeinheit erstreckt sich mit einer Förderbreite in einer Querrichtung Y. Orthogonal dazu verläuft die Förderrichtung X, in welcher auf dem Förderband aufliegende Produkte förderbar sind. Bevorzugt verläuft die Förderrichtung X horizontal. Wiederum orthogonal zur Querrichtung und zur Förderrichtung erstreckt sich eine Höhenrichtung Z.

Die erfindungsgemäße Umlenkeinheit umfasst wenigstens zwei einzeln austauschbare Rollenmodule. Jedes Rollenmodul hat eine eigene, in Querrichtung Y ausgerichtete Rollenachse und einen darauf drehbar gelagerten Rollenmantel. Wenigstens zwei derartige Rollenmodule sind in Querrichtung Y hintereinander liegend angeordnet und bilden dadurch gemeinsam eine erste Rollengruppe.

Die Umlenkeinheit umfasst außerdem ein in Querrichtung Y durchgehendes Tragteil zur gemeinsamen Aufnahme der wenigstens zwei Rollenmodule (E). Weiterhin vorgesehen ist wenigstens eine Modulstütze. Die Modulstütze ist zwischen zwei in Querrichtung Y benachbarten Rollenmodulen angeordnet und dient dazu, die Rollenachse zumindest eines der beiden Rollenmodule in sich aufzunehmen und zu tragen bzw. zu klemmen. Dazu ist in der Modulstütze eine Achsenaufnahme vorgesehen, in welche das Ende der Rollenachse wenigstens eines Rollenmoduls einsetzbar ist. Bevorzugt ist die Achsenaufnahme zylindrisch ausgebildet und nur geringfügig größer als der Außendurchmesser der aufzunehmenden Rollenachse. Die Modulstütze ist erfindungsgemäß lösbar mit dem Tragteil verbindbar. Ein zwischen zwei Modulstützen angeordnetes und alleine von den Modulstützen getragenes Rollenmodul kann daher durch Befestigung der beiden Modulstützen am Tragteil fixiert werden. Weitere Rollenmodule lassen sich in Querrichtung Y hintereinander anordnen, wobei jeweils wenigstens eine Modulstütze zwei Rollenmodule in Querrichtung Y voneinander trennt.

Bevorzugt umfasst die Umlenkeinheit mehr als eine Modulstütze, beispielsweise wenigstens zwei oder drei oder auch eine darüber liegende Anzahl, mit jeweils dazwischen angeordneten Rollenmodulen. Dann kann mit einer Rollengruppe aus mehreren kürzeren und biegesteifen Rollen (bspw. jeweils 100mm lang) auch eine Förderbreite von 600mm oder 800mm oder mehr "überbrückt" werden.

Trotz ihres geringen Durchmessers (beispielsweise 20 - 30mm) sind die einzelnen Rollenmodule aufgrund ihrer im Vergleich zur Förderbreite geringeren Achsenlänge jeweils biegesteif. Da jedes Rollenmodul über eine eigene Achse verfügt, sind die einzelnen Rollenmodule auch leicht individuell austauschbar. Außerdem lässt sich die erfindungsgemäße Umlenkeinheit in Querrichtung modular erweitern, indem die erforderliche Anzahl einzelner Rollenmodule je nach Anwendungsfall gewählt und mit den zugehörigen Modulstützen an einem Tragteil passender Länge befestigt wird.

Bevorzugt sind die Modulstützen - in Querrichtung Y gesehen - möglichst schmal ausgebildet, um die in Querrichtung zueinander benachbarten Rollenmodule bzw. deren Rollenmäntel mit möglichst geringem Abstand zueinander anordnen zu können, und dadurch das Förderband über die gesamte Förderbreite möglichst homogen abstützen und umlenken zu können. Nach einer vorteilhaften Ausführungsform der Erfindung ist daher vorgesehen, dass jede Modulstütze zur Aufnahme der beiden Rollenachsen zweier zueinander benachbarter Rollenmodule ausgebildet ist. Jede Modulstütze trägt dann sowohl das eine Ende der Rollenachse eines ersten Rollenmoduls als auch das andere Ende der Rollenachse eines in Querrichtung Y an das erste Rollenmodul angrenzenden weiteren Rollenmoduls. Die Figurenbeispiele werden dies erläutern. Dazu kann die Achsenaufnahme beispielsweise als eine die Modulstütze in Querrichtung Y vollständig durchdringende Bohrung ausgebildet sein, wobei der Endabschnitt der Rollenachsen der beiden zueinander benachbarten Rollenmodule jeweils von der einen bzw. der gegenüberliegenden anderen Seite der Modulstütze in Querrichtung Y in die Achsenaufnahme eingeschoben werden kann. Alternativ wäre es denkbar, von beiden Seiten der Modulstütze eine nicht durchgehende Bohrung (Sackloch) einzubringen, um jeweils eine Rollenachse aufzunehmen.

Bevorzugt ist jede Modulstütze dazu ausgebildet, die von ihm aufgenommene eine bzw. aufgenommenen beiden Rollenachsen drehfest zu klemmen. Dazu ist an der Achsenaufnahme ein von einem Spannelement lösbar beaufschlagbares Klemmelement vorgesehen. Das Spannelement kann beispielsweise eine Madenschraube sein. Das Klemmelement ist so in der Modulstütze angeordnet, dass es durch Beaufschlagung mit dem Spannelement in radialer Richtung gegen eine Rollenachse gedrückt wird, um diese in der Achsenaufnahme drehfest zu klemmen. Bevorzugt ist das Klemmelement so ausgebildet, dass es bei Beaufschlagung mittels Spannelement gleichzeitig zwei zueinander benachbarte Rollenachsen drehfest klemmt. So können beispielsweise die von zwei gegenüberliegenden Seiten in eine gemeinsame Achsenaufnahme eingeführten Enden zweier zueinander in Querrichtung benachbarter Rollenachsen mit nur einem in der Achsenaufnahme angeordneten Klemmelement schnell und einfach gemeinsam fixiert werden.

Nach einer vorteilhaften Ausführungsform der Erfindung wird das Klemmelement gebildet durch einen einstückig mit der Modulstütze ausgebildeten Wandabschnitt. Insbesondere kann es sich dabei um eine an die Achsenaufnahme angrenzende Materialdünnstelle handeln. Der Wandabschnitt umfasst eine den in die Achsenaufnahme eingesetzten Achsenenden zugewandte Klemmseite und eine den Achsenenden abgewandte Spannseite. Zweckmäßigerweise ist die Klemmseite zugleich ein Teil der Innenwand einer die Achsenaufnahme bildendenden zylindrischen Bohrung. Durch Beaufschlagung der Spannseite mit dem Spannmittel ist der Wandabschnitt soweit reversibel verformbar, dass die Klemmseite in radialer Richtung gegen die Achsenenden gedrückt wird und diese in der Achsenaufnahme festklemmt. Diese Ausführungsform hat den Vorteil, dass das Klemmelement unverlierbar in der Modulstütze ausgebildet ist.

Jede Modulstütze ist über eigene Befestigungsmittel am Tragteil fixierbar, beispielsweise verschraubbar. Das Tragteil kann dazu speziell ausgebildete Befestigungspositionen bzw. Einschubpositionen aufweisen, die beispielsweise in einem konstanten Abstand bzw. Rastermaß (beispielsweise 100mm) in Querrichtung Y nebeneinanderliegen. An den Einschubpositionen kann das Tragteil Ausnehmungen aufweisen, in welche die Modulstützen entgegen der Förderrichtung eingeschoben und dort dann befestigt werden können. Beispielsweise könnten Verstärkungsrippen, welche am Tragteil in Querrichtung Y verlaufen, solche Ausnehmungen aufweisen.

Alternativ könnte die Befestigungsposition einer Modulstütze am Tragteil dort auch frei wählbar sein, beispielsweise mithilfe einer im Tragteil in Querrichtung Y verlaufenden Nut und darin geführten Nutensteinen mit Gewindebohrungen, in die eine mit der jeweiligen Modulstütze verwendbare Schraube eingreifen kann. Dann lassen sich auch unterschiedlich breite Rollenmodule beliebig nebeneinander positionieren.

Vorzugsweise sind zur kontrollierten Befestigung der einzelnen Modulstützen am Tragteil an jeder Modulstütze und/oder an dem die Modulstützen gemeinsam aufnehmenden Tragteil Anschlagflächen vorgesehen, welche die Position der jeweiligen Modulstütze relativ zum Tragteil in Förderrichtung X und/oder Querrichtung Y und/oder in Höhenrichtung Z festlegt.

An den in Querrichtung äußeren Enden der Umlenkeinheit müssen ebenfalls Stützen vorgesehen sein, um die seitlich nach außen weisenden Rollenachsen der jeweils äußersten Rollenmodule aufzunehmen. Dabei kann es sich ebenfalls um solche (bevorzugt gleichartigen) Modulstützen handeln, die auch weiter innen liegend zwischen einzelnen Rollenmodulen angeordnet sind, wobei sie in dieser Randposition nur das nach außen weisende Ende der Rollenachse des äußersten Rollenmoduls aufnehmen. Allerdings könnte an dieser Randposition auch eine etwas andere Stütze vorgesehen sein, die zwar das eine Achsenende funktionsgleich zu den weiter innen liegenden anderen Modulstützen aufnimmt, aber auch weniger oder davon abweichende weitere Merkmale aufweisen kann. Eine solche äußere Stütze könnte ein Verbindungsmittel (beispielsweise in Form eines Anschlagzapfens) aufweisen zur Befestigung der Umlenkeinheit an einem Bandkörper. (Die beiden äußersten Stützen sind gemeinsam mit den dazwischen liegenden Modulstützen am Tragteil befestigt und dadurch auch untereinander alle tragfest miteinander verbunden, so dass die Befestigung der beiden äußersten Stützen - etwa über den Anschlagzapfen - am Bandkörper ausreichen kann, um die Umlenkeinheit als Ganzes am Bandkörper anzuordnen bzw. zu befestigen.

Zur kontrollierten Führung eines Förderbands um die Umlenkeinheit herum kann es erforderlich sein, die aus den einzelnen Rollenmodulen gebildete Rollengruppe mit einer leichten Balligkeit zu versehen. Dadurch wird verhindert, dass das Förderband während des Betriebs in Querrichtung Y von der Umlenkeinheit herunterwandert. Hierzu ist es erforderlich, dass die Rollenmodule E in der Mitte der Förderbreite geringfügig weiter in Förderrichtung X nach vorne ragen als solche am Rand. Diese Balligkeit lässt sich in unterschiedlicher Weise erzeugen:

Nach einer Variante liegen die in sich jeweils geraden Rollenachsen zweier zueinander benachbarter Rollenmodule nicht genau fluchtend hintereinander, sondern sind um einen Winkel ungleich 0° zueinander geneigt. Dazu könnte beispielsweise eine beide Achsen aufnehmende Achsenaufnahme einer Modulstütze soweit ausreichend Spiel bieten, dass die in der gemeinsamen Aufnahme gehaltenen Achsenenden leicht geneigt zueinander fixierbar sind. Wenigstens eine Rollenachse ist dann auch zur Querrichtung Y leicht geneigt. Die beiden Modulstützen, welche das zugehörige Rollenmodul zwischen sich aufnehmen und die beiden Enden der Rollenachse tragen, sind dazu nach ihrer Befestigung am Tragteil in Förderrichtung X unterschiedlich weit vom Tragteil beabstandet. Das kann beispielsweise einfach realisiert werden durch Distanzmittel (Unterlegbleche oder Ähnliches) die nach Bedarf für ausgewählte Modulstützen zwischen den vorstehend beschriebenen Anschlagflächen positioniert werden, oder durch entsprechende spanende Bearbeitung von Anschlagsflächen. Vorzugsweise erfolgt eine solche Bearbeitung am Tragteil, um die Modulstützen identisch ausbilden zu können. Generell vorteilhaft ist es, die Modulstützen der Umlenkeinheit als Gleichteile identisch auszuführen, um Produktions- und Lagerkosten zu minimieren.

Alternativ können die Modulstützen auf gegenüberliegenden Seiten auch in Förderrichtung X zueinander versetzte Achsenaufnahmen aufweisen. Eine auf der einen Seite in die dortige Achsenaufnahme eingesetzte Rollenachse sitzt dann in Förderrichtung X versetzt zu der auf der gegenüberliegenden Seite in die andere Achsenaufnahme eingesetzte Rollenachse eines angrenzenden weiteren Rollenmoduls. Diese Variante hat den Vorteil, dass die Rollenachsen aller Module parallel zueinander verlaufen können. Die Balligkeit wird dann durch eine mit Blick in Förderrichtung X treppenartig auf- und absteigende Positionierung der einzelnen Rollenmodule erreicht.

Nach einer weiteren vorteilhaften Ausführungsform ist die wenigstens eine Modulstütze dazu ausgebildet, wenigstens ein weiteres Rollenmodul aufzunehmen, welches zum ersten Rollenmodul in Höhenrichtung Z bevorzugt beabstandet ist. Die für dieses weitere Rollenmodul vorgesehenen weiteren Achsenaufnahmen entsprechen nach Art und Funktion denjenigen für das erste Rollenmodul. Derartige Modulstützen ermöglichen die Ausbildung zweier in Höhenrichtung Z (und vorzugsweise auch in Förderrichtung X) zueinander beabstandeter Rollengruppen, die sich über die Förderbreite erstrecken. Die höher gelegene erste Rollengruppe bildet dabei das vorderste bzw. hinterste Ende der Transportvorrichtung, welches mit geringem Rollenradius und entsprechend geringem Übergabespalt an eine weitere Transportvorrichtung angrenzt. Die darunterliegende weitere Rollengruppe dient dazu, dass von der oberen Rollengruppe umgelenkte Transportband weiter bzw. vollständig in die Gegenrichtung umzulenken. Insbesondere bei Ersatz einer herkömmlichen Umlenkrolle im Feld wird die zweite Rollengruppe dazu so verwendet und angeordnet, dass das vorher verwendete originale Förderband bzw. dessen Gesamtumfang weiter benutzt werden kann.

Das Tragteil hat bevorzugt ein geringes Gewicht und ist beispielsweise aus Aluminium gefertigt. Es kann sich auch um eine Konstruktion von gewinkelten Blechen (z.B. aus Stahl bzw. Edelstahl) handeln, die bei vergleichsweise geringer Masse eine hohe Biegesteifigkeit bietet.

Die erfindungsgemäße Umlenkeinheit bildet mit dem Tragteil, welches die Modulstützen und die von diesen getragenen einzelnen Rollenmodule gemeinsam aufnimmt, einen komplett und modulartig austauschbaren Umrüstsatz, der über geeignete Verbindungsmittel am Chassis eines Bandkörpers befestigbar ist. Die Befestigung kann erfolgen unmittelbar durch Verbindung des Tragteils mit dem Chassis. Alternativ könnten auch die beiden in Querrichtung Y äußersten Modulstützen am Rand der Umlenkeinheit, die ebenfalls mit dem Tragteil verbunden sind, ihrerseits zur Verbindung mit dem Chassis des Bandkörpers verwendet werden. Das Tragteil dient dann lediglich zur gemeinsamen Aufnahme und Abstützung der Rollenmodule untereinander, ohne seinerseits unmittelbar mit dem Chassis verbunden zu werden. (Der Begriff "Chassis" steht hier stellvertretend für einen zum Bandkörper gehörenden und diesen wesentlich prägenden oder stabilisierenden Grundkörper, der zum Anbau weiterer Komponenten ausgebildet sein kann.)

Die Verbindung zwischen Umlenkeinheit und Chassis kann Einstellmittel umfassen, mit denen der Abstand der Umlenkeinheit zum Chassis des Bandkörpers in Förderrichtung X einstellbar ist. Dadurch kann die Bandspannung eines vom Bandkörper getragenen und die Umlenkeinheit umlaufenden Förderbandes eingestellt werden. Dazu kann die Umlenkeinheit in Förderrichtung X um ein vorgegebenes Maß relativ zum Chassis verschieblich angeordnet sein. Die Einstellmittel können beispielsweise eine Stellschraube umfassen und legen innerhalb dieses Maßes die Relativposition der Umlenkeinheit zum Chassis so fest, dass das vom Chassis und der Umlenkeinheit getragene Förderband ausreichend vorgespannt ist. Die Vorspannung ist erforderlich, um das Band ausreichend stark an bzw. gegen eine Antriebswelle anzudrücken und die daraus resultierende Reibkraft auf das Band zu übertragen.

Zu den Einstellmitteln kann auch ein Anschlagzapfen gehören, der mit der Stellschraube zusammenwirkt. Der Anschlagzapfen kann am Tragteil oder an einer am Rand der Umlenkeinheit positionierten Modulstütze angeordnet sein, und durch Zusammenwirkung mit der Stellschraube die X-Position der gesamten Umlenkeinheit festlegen. Die Einstellmittel können gleichzeitig auch als Verbindungsmittel dienen, um die Umlenkeinheit am Bandkörper zu befestigen.

Nach einer vorteilhaften Ausführungsform der Erfindung umfasst die wenigstens eine Modulstütze einen sich zum Tragteil hin erstreckenden Auflageabschnitt, dessen Oberseite in Höhenrichtung Z vorzugsweise auf der gleichen Höhe liegt wie die Oberseite des Rollenmantels eines von der Modulstütze getragenen Rollenmoduls. Dadurch wird das Förderband auf seinem Weg vom Chassis eines Bandkörpers bis zum von den einzelnen Rollenmodulen gebildeten Rollenkörper zusätzlich von unten unterstützt, um Vibrationen und Laufgeräusche des Förderbandes zu vermeiden und eine möglichst durchgängige Auflagefläche dafür zu bilden.

Der Auflageabschnitt kann an seiner Oberseite einen dünnen Klebestreifen mit abriebfester Oberfläche tragen. Dies ermöglicht die Herstellung der Modulstütze aus einem weicheren und leichten Material, wie z.B. Aluminium. Erforderlichenfalls kann der aus der Dicke des Klebestreifens resultierende Höhenversatz gegenüber dem Rollenmantel konstruktiv ausgeglichen werden.

Eine Ausführungsform der Erfindung soll nachfolgend anhand von Figurenbeispielen näher erläutert werden. Dabei zeigt
- Figur 1: eine perspektivische Ansicht eines Bandkörpers mit Umlenkeinheit
- Figur 2: eine perspektivische vergrößerte Teilansicht aus Figur 1
- Figur 3: ein Rollenmodul im Querschnitt
- Figur 4: zwei einseitig von einer Modulstütze getragene Rollenmodule
- Figur 5: eine Schnittdarstellung zweier von einer Modulstütze getragener Rollen-module
- Figur 6: eine Schnittdarstellung der Umlenkeinheit
- Figur 7: eine Schnittdarstellung der Umlenkeinheit, teilweise demontiert
- Figur 8: eine perspektivische Teilansicht des Tragteils
- Figur 9: das Tragteil gemäß Figur 8 mit eingesetzten Modulstützen
- Figur 10: das Tragteil gemäß Figur 9 mit zugehörigen Rollenmodulen.

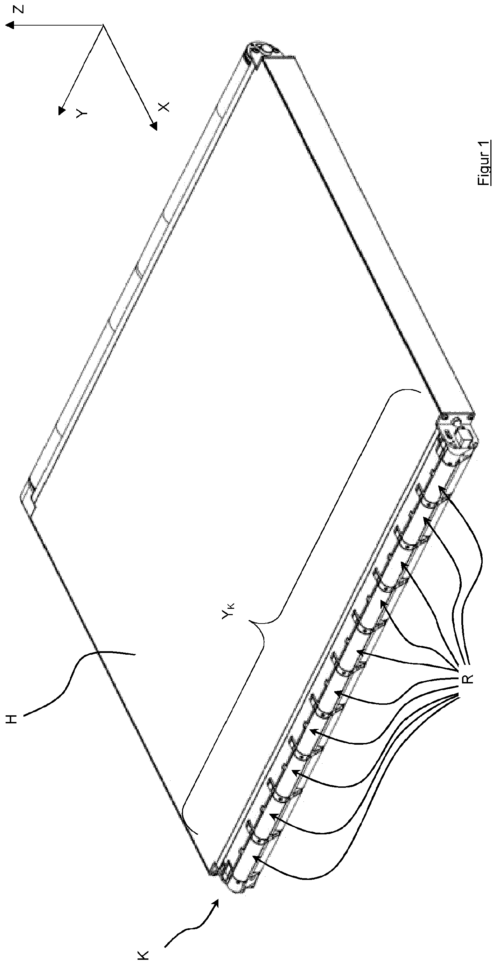

Der Bandkörper H gemäß Figur 1 erstreckt sich in Querrichtung Y über eine Förderbreite K_{Y}. Orthogonal zur Querrichtung Y erstreckt sich die Förderrichtung X horizontal.

Auf einem in Figur 1 nicht dargestellten, den Bandkörper H umlaufenden Förderband lassen sich Produkte in Förderrichtung X durch das angetriebene Förderband fördern. Orthogonal zur Querrichtung Y und Förderrichtung X verläuft die Höhenrichtung Z.

An seinem in Förderrichtung X gesehen vorderen (alternativ oder ergänzend auch am hinteren) Ende trägt der Bandkörper H eine an seinem Chassis befestigte erfindungsgemäße Umlenkeinheit K. Die Umlenkeinheit K enthält eine Mehrzahl von in Querrichtung Y nebeneinander angeordneten Rollenmodulen, die gemeinsam eine erste Rollengruppe R ausbilden. Die erste Rollengruppe R dient dazu, das in Figur 1 nicht zu sehende Förderband umzulenken, und mit einer angrenzenden Transporteinheit einen möglichst kleinen Übergabespalt auszubilden.

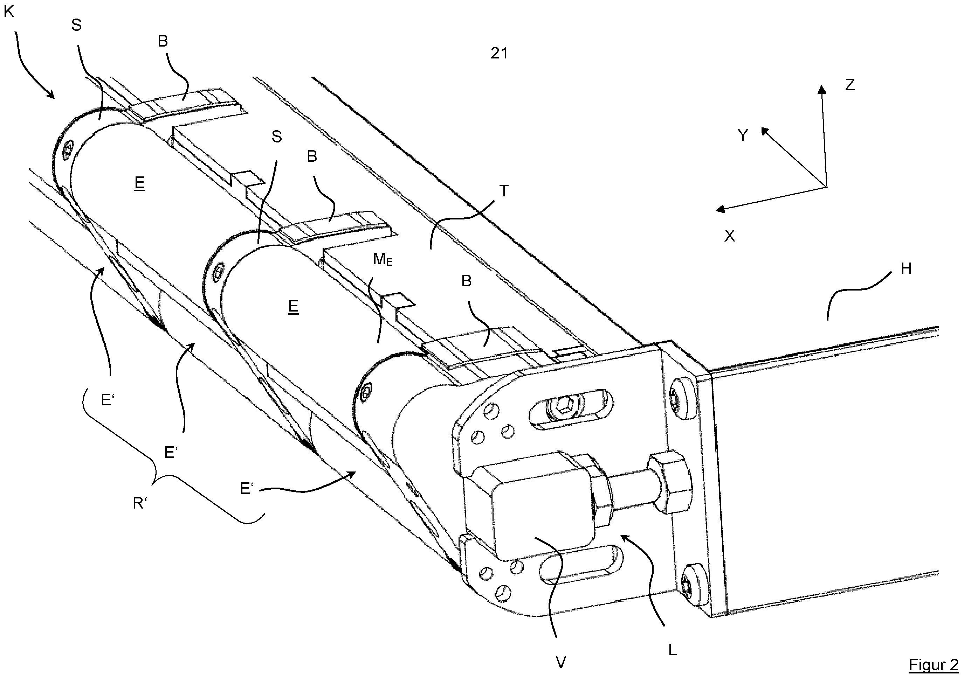

Figur 2 zeigt die am Chassis des Bandkörpers H angeordnete erfindungsgemäße Umlenkeinheit K in vergrößerter perspektivischer Teilansicht. An einem in Querrichtung Y verlaufenden Tragteil T sind in regelmäßigen Abständen einzelne Modulstützen S angeordnet, die zwischen sich jeweils ein oberes Rollenmodul E und ein unteres Rollenmodul E' tragen. Das untere Rollenmodul E' ist relativ zum oberen Rollenmodul E in Förderrichtung X jeweils etwas zurückversetzt und liegt in Höhenrichtung Z darunter. Die oberen Rollenmodule E bilden gemeinsam eine erste Rollengruppe R (s. Fig. 1), die unteren Rollenmodule E' bilden gemeinsam eine zweite Rollengruppe R' (wobei nur einige der insgesamt zu den jeweiligen Rollengruppen R, R' gehörenden Rollenmodule in Fig. 2 zu sehen sind).

Das Tragteil T mit den daran befestigten Modulstützen S und den von den Modulstützen S jeweils beidseitig eingefassten bzw. getragenen Rollenmodulen E, E' ist mithilfe eines Winkelblechs über die zwei äußersten (etwas verbreiterten) Modulstützen am Chassis des Bandkörpers H befestigt. Mit einem als Stellschraube ausgebildeten Einstellmittel L, welches mit einem an der Umlenkeinheit ausgebildeten Anschlagzapfen V zusammenwirkt, kann der Abstand der Umlenkeinheit K vom Chassis des Bandkörpers H in Förderrichtung X so eingestellt werden, dass ein Förderband vorgespannt wird, welches vom Bandkörper H getragen und von der Umlenkeinheit K umgelenkt wird.

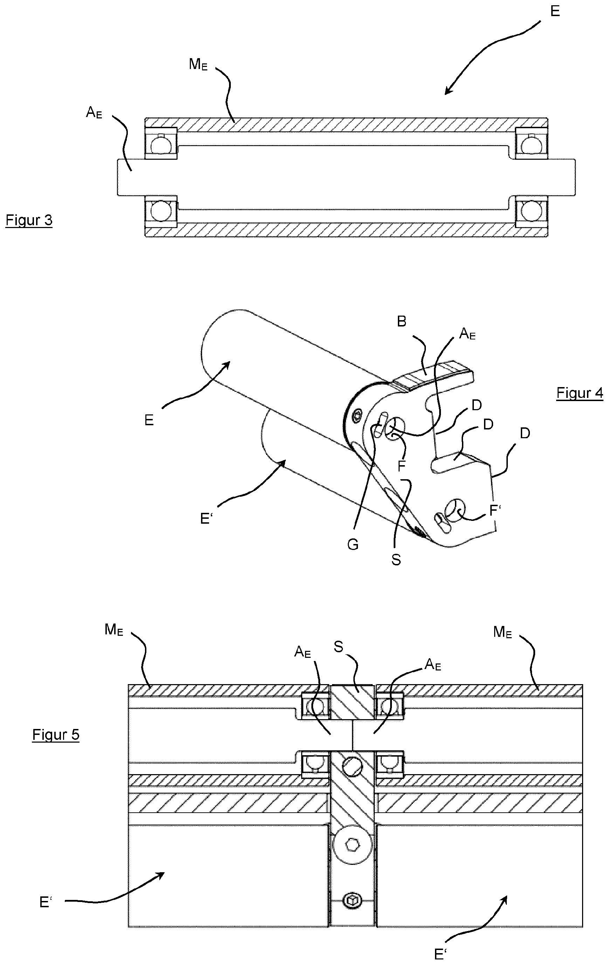

Figur 3 zeigt ein Rollenmodul E in geschnittener Darstellung. Dabei wird ein zylindrischer Rollenmantel M_{E} von einer zentrischen Rollenachse A_{E} getragen mittels zweier nicht näher bezeichneter Wälzlager. Die Enden der Rollenachse ragen seitlich etwas über den Rollenmantel hinaus und sind dazu vorgesehen, in geeignete Achsenaufnahmen der Modulstützen S eingesetzt zu werden.

In Figur 4 ist in perspektivischer Darstellung zu erkennen, dass zwei Rollenmodule E, E' einseitig von einer Modulstütze S getragen werden. Eine gleichartig ausgebildete weitere Modulstütze S, welche die beiden Rollenmodule an ihrem anderen Ende in gleicher Weise trägt, ist hier vereinfachend nicht gezeigt.

Die Modulstütze S umfasst eine obere erste Achsenaufnahme F, die die Modulstütze als durchgehende zylindrische Bohrung in Querrichtung Y durchdringt. Ein Ende der Rollenachse des oberen Rollenmoduls E ragt dabei (in Figur 4 von hinten) in die Achsenaufnahme F hinein. Die Achsenaufnahme F ist so ausgebildet, dass ein zum dargestellten oberen Rollenmodul E benachbartes weiteres Rollenmodul mit einem der Modulstütze zugewandten Ende seiner Rollenachse ebenfalls in diese Achsenaufnahme F eingesetzt werden kann (in Figur 4 von vorne). Dieser Fall ist in der Schnittdarstellung gemäß Figur 5 gezeigt. Zur gleichzeitigen Aufnahme der unteren Rollenmodule E' umfasst die Modulstütze auch für deren Rollenachsen eine gleichartige Achsenaufnahme F'.

Die dargestellte Modulstütze S umfasst ferner einen sich entgegen der Förderrichtung X erstreckenden Auflageabschnitt B. Dessen Oberseite liegt in Höhenrichtung Z auf der gleichen Höhe wie die Oberseite des Rollenmantels M_{E} des von der Modulstütze S getragenen oberen Rollenmoduls E. Er dient dazu, das von der ersten Rollengruppe R umgelenkte Förderband im Bereich zwischen den einzelnen Rollenmodulen in Höhenrichtung abzustützen, um Laufgeräusche und Vibrationen zu reduzieren.

Der Auflageabschnitt kann an seiner Oberseite einen Klebestreifen mit abriebfester Oberfläche tragen. Dies ermöglicht die Herstellung der Modulstütze aus einem weicheren und leichten Material, wie z.B. Aluminium.

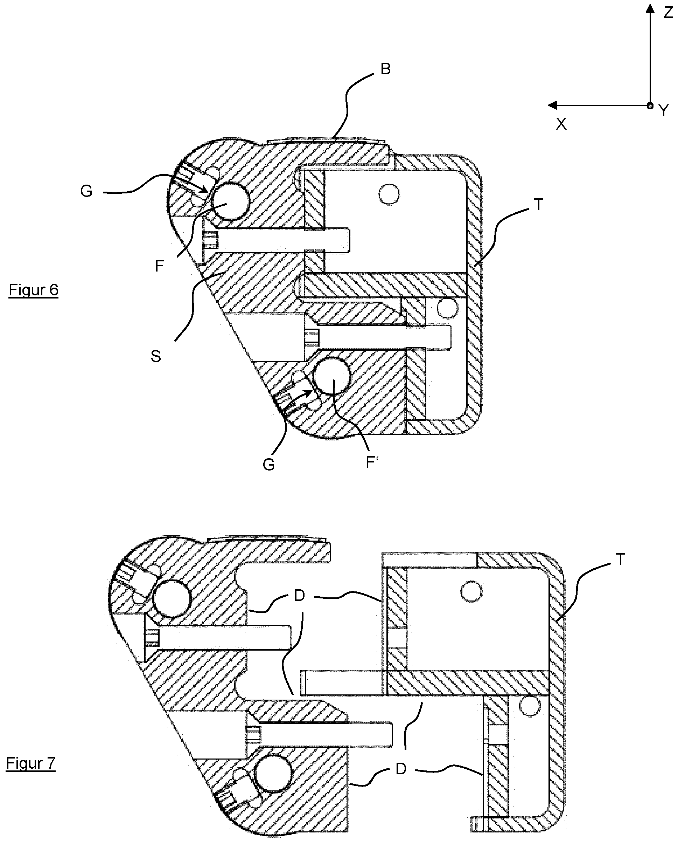

Mit einem bzgl. Figur 6 näher beschriebenen Klemmelement G lassen sich die beiden gemeinsam in die Achsenaufnahme F hineinragenden Rollenachsen gleichzeitig und mit nur einem Klemmelement G drehfest relativ zur Modulstütze S festklemmen.

Die beiden Schnittdarstellungen in Figur 6 und 7 zeigen eine Modulstütze S und ein Tragteil T im miteinander verbundenen Zustand (Figur 6) und im getrennten Zustand (Figur 7). Das aus Biegeblechteilen gebildete Tragteil T ist mit Anschlagflächen D ausgestattet, die mit Anschlagflächen D der Modulstütze S zusammenwirken, wenn beide Komponenten miteinander verbunden, beispielsweise verschraubt werden. Dazu kann die Modulstütze entgegen der Förderrichtung X in Richtung auf das Tragteil T und bis zum Anschlag daran herangeschoben werden. Die Anschlagflächen D positionieren die beiden Komponenten dabei relativ zueinander. Durch Unterlegmittel, die zwischen zusammenwirkenden Anschlagflächen positioniert werden, kann die Relativposition der Modulstütze S relativ zum Tragteil S verändert festgelegt werden, beispielsweise bezogen auf die Förderrichtung X. Dadurch kann die zuvor beschriebene Balligkeit erzeugt werden. Alternativ können die Anschlagflächen D (bevorzugt diejenigen am Tragteil T) auch entsprechend unterschiedlich tief bearbeitet sein (bspw. gefräst), um die angestrebten unterschiedlichen Relativpositionen zu erhalten.

Durch eine Material-Aussparung in der Nähe der Achsenaufnahme F bzw. F' ist ein als Dünnstelle ausgebildetes Klemmelement G entstanden, in Form einer dünnen, geringfügig flexiblen Wand. Die Wand lässt sich auf einer der Achsenaufnahme abgewandten Seite durch ein Spannmittel, beispielsweise eine Madenschraube, mit einer Kraft beaufschlagen. Dadurch wird die Wand bzw. Dünnstelle in Richtung auf die in die Achsenaufnahme eingeführten Rollenachsen verformt, sodass die Rollenachsen in der Aufnahme drehfest geklemmt werden. Vorteilhaft genügt dabei ein einziges Spannmittel zur gleichzeitigen Fixierung beider Rollenachsen.

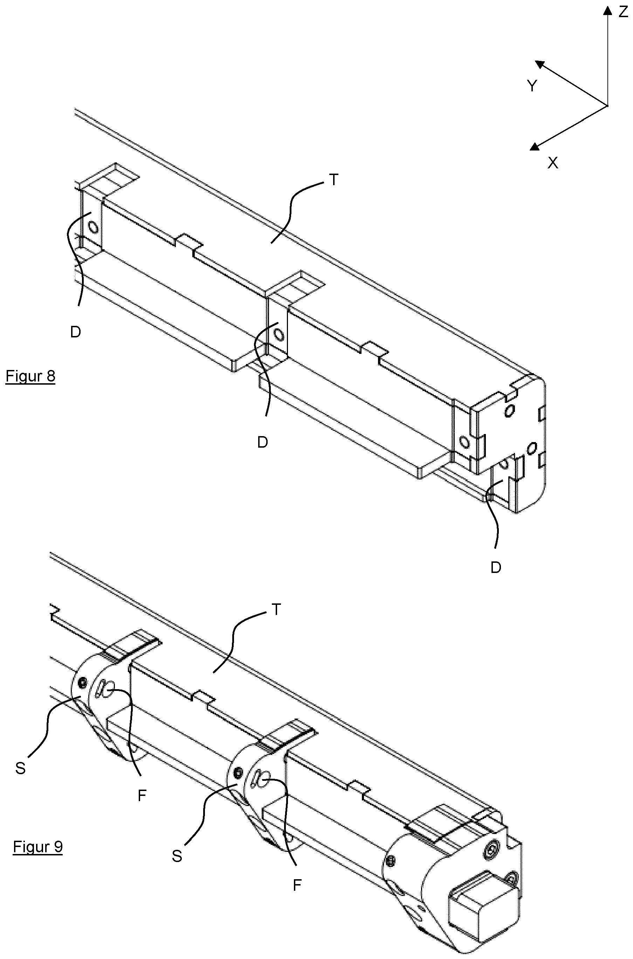

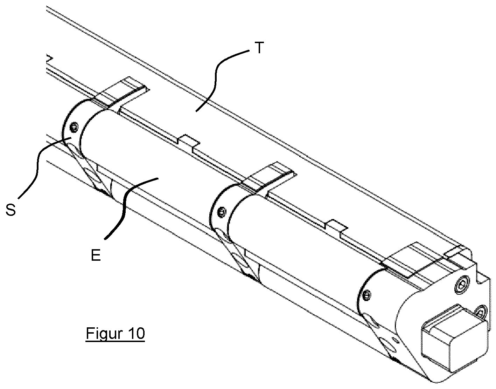

Figur 8 zeigt einen Endabschnitt des erfindungsgemäßen Tragteils T. In regelmäßigen Abständen in Querrichtung Y sind dabei Einschubpositionen mit geeigneten Anschlagflächen D zur Aufnahme jeweils einer Modulstütze S vorgesehen. Figur 9 zeigt das Tragteil T gemäß Figur 8 mit bereits eingesetzten Modulstützen S. In Figur 10 sind auch die zwischen die Modulstützen eingesetzten Rollenmodule E zu sehen.

Die Montage der erfindungsgemäßen Umlenkeinheit K erfolgt zweckmäßigerweise so, dass zunächst alle Rollenmodule E, E' zwischen den zugehörigen Modulstützen S angeordnet werden. Diese gemeinsame Anordnung wird dann nach dem Vorbild der Figuren 6 und 7 entgegen der Förderrichtung X an das Tragteil T herangeschoben und durch Verschrauben der einzelnen Modulstützen S mit dem gemeinsamen Tragteil S verbunden. Die so gebildete Umlenkeinheit wird dann als Ganzes am Chassis eines Bandkörpers H befestigt. Nach dem Aufziehen eines den Bandkörper und die Umlenkeinheit umlaufenden Förderbands kann die Position der Umlenkeinheit in Förderrichtung X relativ zum Chassis eingestellt werden, um die korrekte Bandspannung zu erzeugen.

### Bezugszeichenliste

- A_{E}: Rollenachse
- B: Auflageabschnitt
- D: Anschlagfläche
- E, E': Rollenmodul
- F, F': Achsenaufnahme
- G: Klemmelement
- H: Bandkörper
- K: modulare Umlenkeinheit
- K_{Y}: Förderbreite
- L: Verbindungsmittel als Einstellmittel
- M_{E}: Rollenmantel
- R, R': Rollengruppe
- S: Modulstütze
- T: Tragteil
- V: Verbindungsmittel als Anschlagzapfen
- X: Förderrichtung
- Y: Querrichtung
- Z: Höhenrichtung

## Patentansprüche

1. Modulare Umlenkeinheit (K) zum Umlenken wenigstens eines um die Umlenkeinheit (K) herumführbaren Förderbandes, wobei sich die Umlenkeinheit mit einer Förderbreite (K_{Y}) in einer Querrichtung (Y) erstreckt und wobei sich eine Förderrichtung (X), in welcher Produkte mit dem Förderband förderbar sind, orthogonal zur Querrichtung (Y), vorzugsweise horizontal erstreckt, und wobei sich eine Höhenrichtung (Z) orthogonal zur Querrichtung (Y) und zur Förderrichtung (X) erstreckt,
**dadurch gekennzeichnet, dass** die Umlenkeinheit (K) umfasst:
a) wenigstens zwei einzeln austauschbare Rollenmodule (E), wobei jedes Rollenmodul eine eigene, in Querrichtung (Y) ausgerichtete Rollenachse (A_{E}) und einen darauf drehbar gelagerten Rollenmantel (M_{E}) aufweist, und wobei die Rollenachsen (A_{E}) der wenigstens zwei Rollenmodule in Querrichtung (Y) hintereinander liegen, um über die Förderbreite (K_{Y}) aus mehreren Rollenmodulen (E) gemeinsam eine erste Rollengruppe (R) auszubilden, und
b) ein in Querrichtung (Y) durchgehendes Tragteil (T) zur gemeinsamen Aufnahme der wenigstens zwei Rollenmodule (E), und
c) wenigstens eine zwischen zwei in Querrichtung (Y) benachbarten Rollenmodulen (E) anzuordnende Modulstütze (S) mit einer vorzugsweise zylindrischen Achsenaufnahme (F), wobei die Achsenaufnahme (F) dazu ausgebildet ist, das Ende wenigstens einer der beiden benachbarten Rollenachsen (A_{E}) in sich aufzunehmen und dadurch zu tragen, und wobei die Modulstütze (S) lösbar mit dem Tragteil (T) verbindbar ist, um das von der Modulstütze (S) getragene Rollenmodul (E) durch Befestigung der Modulstütze (S) am Tragteil (T) zu fixieren.

2. Umlenkeinheit (K) nach dem vorhergehenden Anspruch, wobei die Achsenaufnahme (F) die Modulstütze (S) in Querrichtung (Y) - insbesondere in Form einer zylindrischen Bohrung - wenigstens teilweise durchdringt und/oder dazu ausgebildet ist, beide Enden zweier zueinander benachbarten Rollenachsen (A_{E}) aufzunehmen und gemeinsam zu fixieren.

3. Umlenkeinheit (K) nach einem der beiden vorhergehenden Ansprüche, **dadurch gekennzeichnet, dass** die Achsenaufnahme (F) ein von einem Spannelement, insbesondere einer Schraube, lösbar beaufschlagbares Klemmelement (G) aufweist, mit welchem wenigstens eines, vorzugsweise beide Enden der zueinander benachbarten Rollenachsen (A_{E}) drehfest in der Modulstütze (S) einklemmbar sind.

4. Umlenkeinheit (K) nach dem vorhergehenden Anspruch, wobei das Klemmelement (G) gebildet wird durch einen einstückig mit der Modulstütze (S) ausgebildeten Wandabschnitt, insbesondere Materialdünnstelle, mit einer den Achsenenden zugewandten Klemmseite und einer den Achsenenden abgewandten Spannseite, und wobei der Wandabschnitt durch Beaufschlagung der Spannseite mit dem Spannmittel soweit reversibel verformbar ist, dass die Klemmseite in radialer Richtung gegen die Achsenenden gedrückt wird und diese in der Achsenaufnahme (F) festklemmt.

5. Umlenkeinheit (K) nach einem der vorhergehenden Ansprüche, **dadurch gekennzeichnet, dass** am Tragteil (T) für jede zu befestigende Modulstütze (S) wenigstens eine mit der Modulstütze (S) zusammenwirkende Anschlagfläche (D) vorgesehen ist, welche die Position der Modulstütze (S) relativ zum Tragteil (T) in Förderrichtung (X) und/oder Querrichtung (Y) und/oder in Höhenrichtung (Z) festlegt.

6. Umlenkeinheit (K) nach einem der vorhergehenden Ansprüche, **dadurch gekennzeichnet, dass** die aus mehreren Rollenmodulen gebildete erste Rollengruppe (R) insgesamt eine Balligkeit aufweist, bei der Rollenmodule (E) in der Mitte der Förderbreite (K_{Y}) geringfügig weiter in Förderrichtung (X) nach vorne ragen als solche am Rand.

7. Umlenkeinheit (K) nach dem vorhergehenden Anspruch, wobei die Balligkeit erzeugt wird,
a) indem die Rollenachsen (A_{E}) wenigstens zweier benachbarter Rollenmodule (E) unter einem Winkel ungleich 0° zueinander in der gemeinsamen Achsenaufnahme (F) der dazwischen liegenden Modulstütze (S) fixiert sind, und/oder
b) indem eine Modulstütze (S) das Ende einer von zwei benachbarten Rollenachsen (A_{E}) in einer ersten Achsenaufnahme und das Ende der anderen Rollenachse in einer zweiten Achsenaufnahme aufnimmt, und wobei die erste und zweite Achsenaufnahme nach Befestigung der Modulstütze (S) am Tragteil (T) in Förderrichtung (X) unterschiedlich weit vom Tragteil (T) beabstandet sind, und/oder
c) indem zwei in Querrichtung (Y) zueinander benachbarte Modulstützen (S) so am Tragteil (T) fixiert sind, dass ihre Achsenaufnahmen (F) für das dazwischen liegende Rollenmodul (E) nach Befestigung der Modulstütze (S) am Tragteil (T) unterschiedlich weit vom Tragteil (T) beabstandet sind und dadurch die von den beiden benachbarten Modulstützen (S) gehaltene Rollenachse (A_{E}) zur Querrichtung (Y) leicht geneigt ist.

8. Umlenkeinheit (K) nach einem der vorhergehenden Ansprüche, **dadurch gekennzeichnet, dass** die wenigstens eine Modulstütze (S) zusätzlich zur Achsenaufnahme (F) wenigstens eine dazu in Höhenrichtung (Z) beabstandete, gleichartige weitere Achsenaufnahme (F') aufweist, um darin analog zur ersten Achsenaufnahme (F) die Rollenachse wenigstens eines zusätzlichen weiteren Rollenmoduls (E') aufzunehmen und dadurch eine zur ersten Rollengruppe (R) in Z-Richtung beabstandete weitere Rollengruppe (R') auszubilden.

9. Umlenkeinheit (K) nach einem der vorhergehenden Ansprüche, **dadurch gekennzeichnet, dass** das Tragteil (T) oder eine oder mehrere damit verbundene Modulstützen (S) Verbindungsmittel (L, V) aufweisen, mit denen die den gesamten Rollenkörper (R, R') tragende Umlenkeinheit (K) als modulares Austauschelement lösbar am Chassis eines Bandkörpers (H) befestigbar ist.

10. Umlenkeinheit (K) nach dem vorhergehenden Anspruch, **dadurch gekennzeichnet, dass** Einstellmittel (L) an der Umlenkeinheit (K) vorgesehen sind, mit denen der Abstand der Umlenkeinheit (K) zum Chassis des Bandkörpers (H) in Förderrichtung (X) einstellbar ist, um dadurch die Bandspannung eines vom Bandkörper (H) getragenen und die Umlenkeinheit (K) umlaufenden Förderbandes einstellen zu können.

11. Umlenkeinheit (K) nach dem vorhergehenden Anspruch, **dadurch gekennzeichnet, dass** die wenigstens eine Modulstütze (S) einen sich zum Tragteil (T) hin erstreckenden Auflageabschnitt (B) aufweist, dessen Oberseite in Höhenrichtung (Z) auf der gleichen Höhe liegt wie die Oberseite des Rollenmantels (M_{E}) eines von der Modulstütze getragenen Rollenmoduls (E), um ein von dem Rollenmantel (M_{E}) umgelenktes Förderband zusätzlich zu stützen.

12. Bandkörper (H) zum Transport von Gütern mit einem Chassis, umfassend eine am Chassis modular austauschbar angeordnete Umlenkeinheit (K) nach einem der vorigen Ansprüche.

13. Waage, umfassend eine Vorlast bildende Umlenkeinheit (K) nach einem der Ansprüche 1 bis 10.
